# EUROPEAN PATENT APPLICATION

(11) **EP 4 685 979 A1**
(43) Date of publication of application: **28.01.2026**
(21) Application number: 24881038.4
(22) Date of filing: 11.06.2024
(51) Int. Cl.: H01M 50/503

(54) **HIGH-VOLTAGE BOX, BATTERY, AND ELECTRICAL DEVICE**

(30) Priority: 23.10.2023 CN 202311379260
(71) Applicant: Contemporary Amperex Technology Co., Limited, Ningde City, Fujian 352100 (CN)
(72) Inventor: QIU, Guanda, Ningde, Fujian 352100 (CN); WANG, Chong, Ningde, Fujian 352100 (CN); ZHENG, Chenling, Ningde, Fujian 352100 (CN); LI, Yuanxin, Ningde, Fujian 352100 (CN)
(74) Representative: Ziebig Hengelhaupt Intellectual Property Attorneys Patentanwaltskanzlei PartGmbB
(86) International application number: PCT/CN2024/098414
(87) International publication number: WO 2025/086660

(57) **Abstract**

A high-voltage box (40), a battery (10), and an electrical device. The high-voltage box (40) comprises: a first housing (30), having a wall portion (110) and an accommodating space (120) enclosed by the wall portion (110), wherein the accommodating space (120) is used for accommodating an electrical device (50); an electrical connector (200), disposed in the first housing (30), the electrical connector (200) comprising a plurality of terminals (210) and a conductive connection portion (220), wherein the conductive connection portion (220) is connected to at least one terminal (210) and is integrally formed with the terminal (210), and the terminals (210) are used for connecting the electrical device (50). The solution simplifies the process of assembling high-voltage boxes, improving the efficiency of assembling the high-voltage boxes, thereby accelerating battery assembling.

## Description

### CROSS-REFERENCE TO RELATED APPLICATION

The present application claims priority to Chinese Patent Application No. 202311379260.X, filed on October 23, 2023 and entitled "HIGH-VOLTAGE BOX, BATTERY, AND ELECTRIC DEVICE", the content of which is incorporated herein by reference in its entirety.

### TECHNICAL FIELD

The present application relates to the field of energy storage, and in particular, to a high-voltage box, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

### SUMMARY

In view of the above problem, the present application provides a high-voltage box, a battery, and an electric device, which can increase the assembly rate of the battery.

In a first aspect, the present application provides a high-voltage box for a battery. The high-voltage box includes: a first housing, having a wall part and an accommodating space defined by the wall part in an enclosing manner, where the accommodating space is configured to accommodate an electric component; and an electric connector, disposed in the first housing, where the electric connector includes a plurality of terminals and conductive connection parts, each of the conductive connection parts is connected to at least one of the terminals and is integrally formed with the terminal, and the terminal is configured to connect to the electric component.

In the technical solution of the embodiments of the present application, the high-voltage box includes the first housing and the electric connector, and the wall part of the first housing defines, in an enclosing manner, the accommodating space, such that the electric component can be disposed in the accommodating space. The electric connector includes the terminal and the conductive connection part. The terminal is configured to connect to the electric component, and the conductive connection part is connected to at least one terminal. In addition, the conductive connection part and the terminal are integrally formed, eliminating the need for a secondary mating between the conductive connection part and the terminal within the high-voltage box. Therefore, the assembly process of the high-voltage box can be simplified, and the assembly efficiency of the high-voltage box is improved, thereby increasing the assembly rate of the battery.

In some embodiments, the terminal includes a body part and a jaw part that are integrally connected, the body part defines, in an enclosing manner, a hollow zone, and the jaw part is connected to an edge of the hollow zone and is bent upward in a thickness direction of the body part.

In these embodiments, the terminal includes a body part and a jaw part, the body part is provided with a hollow zone, and the jaw part is connected to a peripheral side of the hollow zone, such that the jaw part can be formed by stamping a plate member, and the jaw part is bent upward relative to the body part, facilitating connection between the jaw part and the connecting part of the electric component.

In some embodiments, the wall part includes a connecting hole provided in a penetrating manner, and the jaw part and the connecting hole are arranged in a corresponding manner, such that the jaw part is capable of connecting to the electric component via the connecting hole.

In these embodiments, the wall part is provided with a connecting hole, such that the connecting part of the electric component is capable of extending into the connecting hole to connect to the jaw part.

In some embodiments, the jaw part includes two or more jaw plates, each of the jaw plates is connected to at least one side in a circumferential direction of the hollow zone, and at least two jaw plates are disposed on two sides of the hollow zone and extend in a direction close to each other, such that the connecting part of the electric component is capable of being sandwiched between the two jaw plates.

In these embodiments, the jaw part includes a plurality of jaw plates, and at least two jaw plates are oppositely disposed on two sides of the hollow zone and extend in the direction close to each other. By using elastic force of the two jaw plates, an interference fit can be formed between the jaw plates and the connecting part of the electric component, such that the connecting part is capable of being snap-fitted between the two jaw plates. Therefore, the connection mode between the electric component and the jaw part can be simplified, and the stability of the electrical connection can be ensured.

In some embodiments, the body part is injection molded into the wall part, and the jaw part protrudes out of a surface of the wall part.

In these embodiments, the body part is injection molded into the wall part, such that the wall part can provide protection for the body part to alleviate scratches on the body part by other components. The jaw part protrudes out of the surface of the wall part, facilitating the electrical connection between the jaw part and the connecting part of the electric component. In addition, since the body part is injection molded into the wall part, the positional stability of the body part can be ensured. When the connecting part is snap-fitted to the jaw part, the impact of the unstable position of the jaw part on the stability of the electrical connection is alleviated.

In some embodiments, the conductive connection part is injection molded into the wall part.

In these embodiments, the wall part can provide protection for the conductive connection part, preventing the conductive connection part from being suspended in the accommodating space and affecting the mounting of other components.

In some embodiments, the electric connector further includes a plug-in end, at least one conductive connection part is connected between the terminal and the plug-in end, and the conductive connection part, the terminal, and the plug-in end that are connected to one another are integrally formed.

In these embodiments, some terminals are electrically connected to the outside through the plug-in end, such that the other end of some conductive connection parts is connected to the plug-in end. The conductive connection part, the terminal, and the plug-in end that are connected to one another are integrally formed, which can further simplify the structure of the electric connector. Moreover, there is no need to assemble the conductive connection part and the plug-in end in the high-voltage box. Therefore, the assembly process of the high-voltage box can be simplified, and the assembly efficiency of the high-voltage box is improved, thereby increasing the assembly rate of the battery.

In some embodiments, a plug-in port is further included. The plug-in end is plugged into the plug-in port, and the plug-in port is injection molded on the wall part.

In these embodiments, the plug-in port configured to accommodate the plug-in end is injection molded on the wall part, and there is no need to assemble the plug-in port and the first housing in the high-voltage box. Therefore, the assembly process of the high-voltage box can be simplified, and the assembly efficiency of the high-voltage box is improved, thereby increasing the assembly rate of the battery.

In some embodiments, the wall part includes a top wall and a side wall connected to a peripheral side of the top wall, the top wall and the side wall define, in an enclosing manner, the accommodating space, and the electric connector is disposed on the top wall.

In these embodiments, the electric connector is disposed on the top wall, facilitating electrical connection between the terminals of the electric connector and electric components at different positions in the accommodating space.

In some embodiments, the side wall is provided with a first snap part; and the high-voltage box further includes a second housing, the second housing is disposed on a side of the side wall facing away from the top wall, the second housing is provided with a second snap part, and the first housing and the second housing are snap-fitted to each other through the first snap part and the second snap part.

In these embodiments, the first housing and the second housing are snap-fitted to each other through the first snap part and the second snap part, which can simplify the assembly process of the first housing and the second housing, improve the assembly efficiency of the high-voltage box, and ensure the stability of the relative positions between the first housing and the second housing.

In a second aspect, the embodiments of the present application further provide a battery. The battery includes the high-voltage box according to any one of the above first aspects.

In a third aspect, the embodiments of the present application further provide an electric device. The electric device includes the battery according to any one of the above first aspects, and the battery is used to provide electrical energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred implementations below, various additional advantages and benefits will become clear to those of ordinary skill in the art. The drawings are provided solely for the purpose of illustrating the preferred implementations and shall not be construed as limiting the scope of the present application. Furthermore, the same reference numerals in all the drawings denote identical components. In the drawings:
FIG. 1 is a schematic structural diagram of a vehicle according to an embodiment of the present application;
FIG. 2 is a schematic structural diagram of a battery according to an embodiment of the present application;
FIG. 3 is a schematic exploded structure diagram of a high-voltage box according to an embodiment of the present application;
FIG. 4 is an isometric view of a high-voltage box according to an embodiment of the present application;
FIG. 5 is a top view of a high-voltage box according to an embodiment of the present application;
FIG. 6 is a top view of a high-voltage box according to another embodiment of the present application; and
FIG. 7 is a top view of A-A in FIG. 6.

Reference numerals in the detailed description are as follows:
1: vehicle; 10: battery; 11: controller; 12: motor; 20: battery cell; 30: housing; 301: upper cover; 302: lower housing body; 40: high-voltage box; 401: bottom housing; 4021: first upper housing; 4022: second upper housing; 50: electric component; 51: connecting part;
100: first housing; 110: wall part; 110a: top wall; 120a: side wall; 111: connecting hole; 120: accommodating space; 130: first snap part;
200: electric connector; 210: terminal; 211: body part; 212: jaw part; 212a: jaw plate; 213: hollow zone; 220: conductive connection part; 230: plug-in end;
300: plug-in port;
400: second housing; 410: second snap part;
X: first direction; Y: second direction; Z: thickness direction.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

It should be noted that, unless otherwise specified, the technical or scientific terms used in the embodiments of the present application shall have ordinary meanings understood by those skilled in the art to which the embodiments of the present application belong.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In addition, the technical terms "first", "second", and the like are used for description only and are not to be construed as indicating or implying relative importance or to implicitly indicate the number of technical features indicated. In the description of the embodiments of the present application, unless otherwise specifically defined, "plurality of" means two or more.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

In the description of the embodiments of the present application, unless otherwise clearly specified and defined, a first feature being "above" or "below" a second feature may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or may simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of power batteries, the market demand for power batteries is also constantly increasing.

In the present application, battery cells may include lithium-ion secondary battery cells, lithium-ion primary battery cells, lithium-sulfur battery cells, sodium-ion battery cells, etc., which are not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a housing used to encapsulate one or a plurality of battery cells. The housing can prevent liquid or other foreign matters from affecting the charging or discharging of the battery cells.

A battery cell includes an electrode assembly and an electrolyte, and the electrode assembly includes a positive electrode plate, a negative electrode plate, and a separator. A battery cell primarily works by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The positive electrode current collector includes a positive electrode current collecting part and a positive electrode tab connected to the positive electrode current collecting part. The positive electrode current collecting part is coated with the positive electrode active substance layer, and the positive electrode tab is not coated with the positive electrode active substance layer. Taking lithium-ion batteries as an example, the material of the positive electrode current collector may be aluminum, the positive electrode active substance layer includes a positive electrode active substance, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The negative electrode current collector includes a negative electrode current collecting part and a negative electrode tab connected to the negative electrode current collecting part. The negative electrode current collecting part is coated with the negative electrode active substance layer, and the negative electrode tab is not coated with the negative electrode active substance layer. The material of the negative electrode current collector may be copper, the negative electrode active substance layer includes a negative electrode active substance, and the negative electrode active substance may be carbon, silicon, or the like. The material of the separator may be polypropylene (PP), polyethylene (PE), or the like.

A high-voltage box is provided inside the battery, and the high-voltage box is configured to accommodate high-voltage electric components such as a relay. These electric components require real-time control and sampling. Both control and sampling necessitate the use of a terminal-crimped wire harness to connect all the electric components together, and then the electric components are placed into the high-voltage box for assembly and mounting. The assembly process is complex, time-consuming, and labor-intensive.

To alleviate the above technical problem, the terminal and the wire harness may be formed using an integral forming process, eliminating the need for assembling and connecting the terminal and the wire harness within the high-voltage box, thereby improving the assembly efficiency of the high-voltage box and reducing the assembly time of the high-voltage box.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

It should be understood that the technical solutions described in the embodiments of the present application are not limited to the batteries and electric devices described above. They are also applicable to all batteries that include a housing, as well as electric devices that utilize batteries. However, for brevity, the following embodiments are described using an electric vehicle as an example.

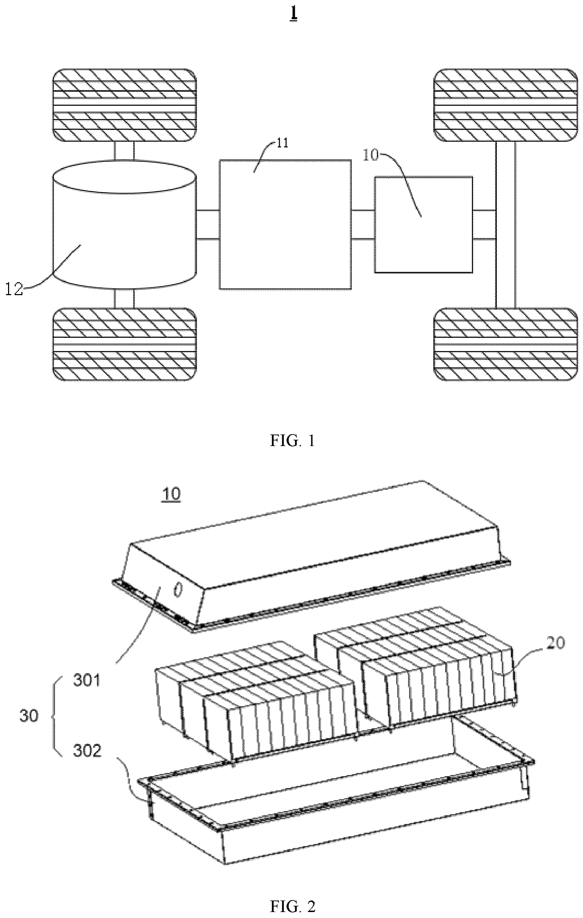

Referring to FIG. 1, FIG. 1 is a schematic structural diagram of a vehicle 1 according to some embodiments of the present application. The vehicle 1 may be a fuel vehicle, a gas vehicle, or a new energy vehicle. The new energy vehicle may be a pure electric vehicle, a hybrid vehicle, an extended-range vehicle, or the like. A battery 10 is disposed inside the vehicle 1, and the battery 10 may be disposed at the bottom, head, or tail of the vehicle 1. The battery 10 may be configured to power the vehicle 1. For example, the battery 10 may serve as an operation power source of the vehicle 1. The vehicle 1 may further include a controller 11 and a motor 12. The controller 11 is configured to control the battery 10 to supply power to the motor 12, e.g., for operation power needed by the vehicle 1 for start-up, navigation, and driving.

In some embodiments of the present application, the battery 10 may not only serve as an operation power source for the vehicle 1, but also as a driving power source for the vehicle 1 to, instead of or in part instead of fuel or natural gas, provide driving power for the vehicle 1.

To meet different power usage requirements, the battery 10 may include a plurality of battery cells, and a battery cell refers to the smallest unit that forms a battery module or a battery pack. A plurality of battery cells may be connected in series and/or in parallel via electrode terminals to be applied to various application scenarios. The battery mentioned in the present application includes a battery module or a battery pack. The plurality of battery cells may be connected in series, in parallel, or in series-parallel. The series-parallel connection refers to a combination of series connection and parallel connection. In the embodiments of the present application, a plurality of battery cells may be directly assembled into a battery pack, or may be first assembled into a battery module, which is then assembled into a battery pack.

FIG. 2 shows a schematic structural diagram of a battery 10 according to an embodiment of the present application.

As shown in FIG. 2, the battery 10 includes a housing 30 and a battery cell disposed in the housing 30. The housing 30 may be of a simple three-dimensional structure such as a single rectangular parallelepiped, cylinder, or sphere, or may also be of a complex three-dimensional structure composed of simple three-dimensional structures such as a rectangular parallelepiped, a cylinder, or a sphere, which is not limited in the embodiments of the present application. The housing 30 may be made of an alloy material such as aluminum alloy and iron alloy, or a polymer material such as polycarbonate and polyisocyanurate foam plastic, or a composite material such as glass fiber plus epoxy resin, which is also not limited in the embodiments of the present application.

The housing 30 is configured to accommodate the battery cell, and the housing 30 may be of a variety of structures. In some embodiments, the housing 30 may include an upper cover 301 and a housing body 302. The upper cover 301 and the housing body 302 are lidded with each other, and the upper cover 301 and the housing body 302 jointly define an accommodating space 330 for accommodating the battery cell. The first housing part may be a hollow structure with one end open, the housing body 302 is of a plate-shaped structure, and the housing body 302 is lidded onto the open side of the upper cover 301 to form the housing 30 having the accommodating space 330. The upper cover 301 and the housing body 302 may also each be a hollow structure with one side open, and the open side of the upper cover 301 is lidded onto the open side of the housing body 302 to form the housing 30 having the accommodating space 330. Certainly, the upper cover 301 and the housing body 302 may be in various shapes, such as a cylindrical shape and a rectangular parallelepiped shape.

To improve the sealing performance between the upper cover 301 and the housing body 302 after connection, a sealing member, such as a sealant or a seal ring, may be further provided between the upper cover 301 and the housing body 302.

If the upper cover 301 is lidded onto the top of the housing body 302, the upper cover 301 may also be referred to as an upper housing body, and the housing body 302 may also be referred to as a lower housing body.

Optionally, a plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the housing 30. Alternatively, the plurality of battery cells 20 may be first connected in series, in parallel, or in series-parallel to form battery units, and then the plurality of battery units are connected in series, in parallel, or in series-parallel to form a whole and accommodated in the housing 30.

Optionally, the battery cell 20 further includes a shell, and the shell may be configured to accommodate the electrode assembly, the electrolyte (not shown in the figure), and other components. The battery cell 20 may further include an end cover that is lidded onto the opening of the shell. The shell and the end cover may be independent components. An opening may be formed in the shell, and the end cover is lidded onto the opening at the opening to form the internal environment of the battery cell 20. Without limitation, the end cover and the shell may be integrated. Specifically, the end cover and the shell may form a common connection surface before other components are placed in the shell, and when the interior of the shell needs to be encapsulated, the end cover is lidded onto the shell. The shell may be in various shapes and dimensions, such as a rectangular parallelepiped, a cylinder, and a hexagonal prism. Specifically, the shape of the shell may be determined according to the specific shape and dimensions of the electrode assembly. The shell may be made of a variety of materials, such as copper, iron, aluminum, stainless steel, an aluminum alloy, and plastic, which is not specified in the embodiments of the present application.

In the present application, the battery cell 20 may include a lithium-ion battery cell, a sodium-ion battery cell, a magnesium-ion battery cell, or the like, which is not limited in the embodiments of the present application. The battery cell 20 may be cylindrical, or in other shapes. However, for the sake of brevity, the following embodiments are all illustrated using a prismatic battery cell as an example. A prismatic battery cell refers to a battery cell with a quadrangular prism shape.

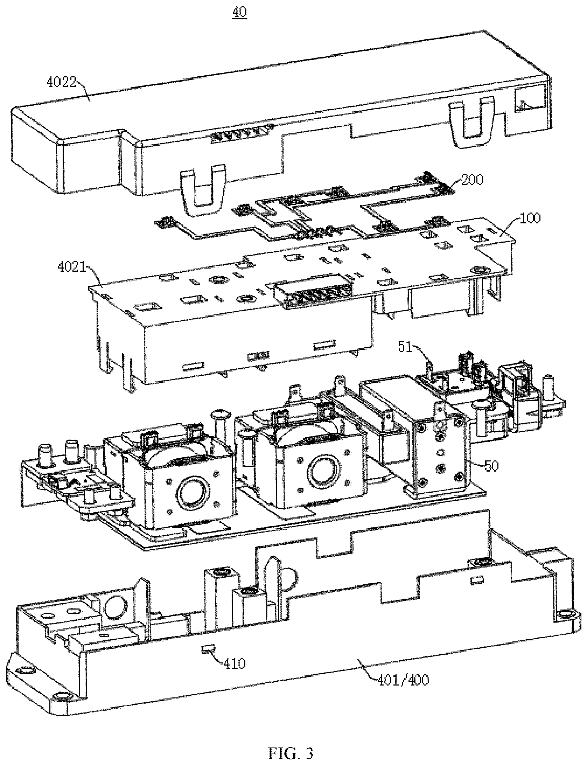

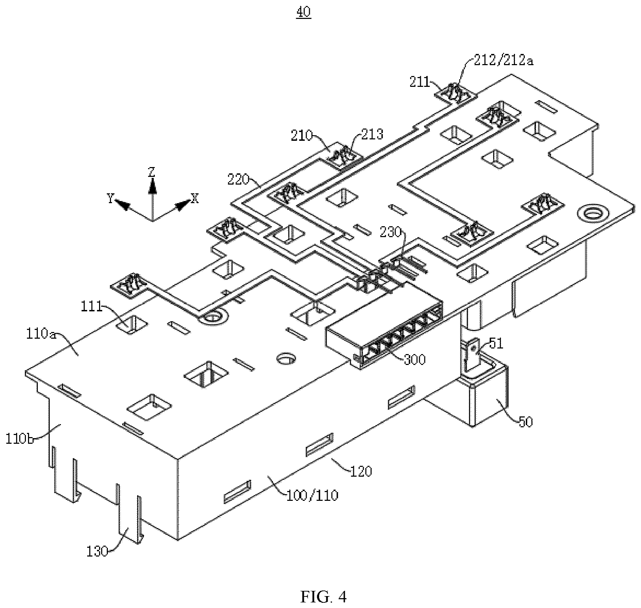

Referring to FIGs. 3 and 4, a high-voltage box 40 is further disposed inside the housing, and the high-voltage box 40 is configured to arrange a high-voltage electric component 50 such as a relay. The high-voltage box 40 may be disposed inside the housing 30, or the high-voltage box 40 is disposed outside the housing 30.

As shown in FIGs. 3 and 4, the high-voltage box 40 includes a first housing 100 and an electric connector 200. The first housing 100 has a wall part 110 and an accommodating space 120 defined by the wall part 110 in an enclosing manner, and the accommodating space 120 is configured to accommodate an electric component 50. The electric connector 200 is disposed in the first housing 100, the electric connector 200 includes a plurality of terminals 210 and conductive connection parts 220, each of the conductive connection parts 220 is connected to at least one of the terminals 210 and is integrally formed with the terminal 210, and the terminal 210 is configured to connect to the electric component 50.

In the technical solution of the embodiments of the present application, the high-voltage box 40 includes the first housing 100 and the electric connector 200, and the wall part 110 of the first housing 100 defines, in an enclosing manner, the accommodating space 120, such that the electric component 50 can be disposed in the accommodating space 120. The electric connector 200 includes the terminal 210 and the conductive connection part 220. The terminal 210 is configured to connect to the electric component 50, and the conductive connection part 220 is connected to at least one terminal 210. In addition, the conductive connection part 220 and the terminal 210 are integrally formed, eliminating the need for a secondary mating between the conductive connection part 220 and the terminal 210 within the high-voltage box 40. Therefore, the assembly process of the high-voltage box 40 can be simplified, and the assembly efficiency of the high-voltage box 40 is improved, thereby increasing the assembly rate of the battery.

The high-voltage box 40 may be configured in various ways. For example, the high-voltage box 40 includes an upper housing and a bottom housing 401 that are connected to each other, and the first housing 100 may be the upper housing of the high-voltage box 40. The high-voltage box 40 may also adopt a double-layer top cover configuration, that is, the high-voltage box 40 includes two upper housings arranged in a stacked manner. The two upper housings are respectively a first upper housing 4021 and a second upper housing 4022, with the first upper housing 4021 disposed between the second upper housing 4022 and the bottom housing 401. The first housing 100 may be the first upper housing 4021, such that the second upper housing 4022 can provide protection for the electric connector 200 disposed on the first upper housing 4021.

The terminal 210 of the electric connector 200 is configured to connect to the electric component 50, and the conductive connection part 220 of the electric connector 200 is equivalent to the above wire harness. The conductive connection part 220 and the terminal 210 are integrally formed, eliminating the need for connecting the terminal 210 and the conductive connection part 220 during the assembly process of the high-voltage box 40. The terminal 210 and the conductive connection part 220 may be manufactured and formed by stamping and cutting from a conductive sheet, or other processes. Optionally, the electric connector 200 may include a plurality of conductive connection parts 220, and the plurality of conductive connection parts 220 are configured to connect to different terminals 210. The plurality of conductive connection parts 220 and terminals 210 may be simultaneously manufactured using the same conductive sheet before being cut, such that the plurality of conductive connection parts 220 and the plurality of terminals 210 are separated from each other, preventing short-circuits between the plurality of terminals 210.

Optionally, the conductive connection part 220 may be connected between two terminals 210, such that two electric components 50 connected to the terminals 210 can be electrically connected to each other through the conductive connection part 220. Optionally, one end of the conductive connection part 220 is connected to the terminal 210, and the other end of the conductive connection part 220 may be connected to a connector such as a plug-in member, such that the electric component 50 connected to the terminal 210 can be electrically connected to an external device through the conductive connection part 220 and the plug.

Optionally, the terminal 210 corresponds to the position of the electric component 50 in the accommodating space 120, and the conductive connection part 220 extends along a bending path, such that the position of the terminal 210 can be arranged with greater flexibility.

Optionally, "being integrally formed" means that two parts may be processed and formed using the same plate. For example, the conductive connection part 220 and the terminal 210 may be processed and formed using the same conductive plate, which can enhance the connection strength between the conductive connection part 220 and the terminal 210. In addition, since the conductive connection part 220 and the terminal 210 are inherently connected to each other, there is no need to perform the operation of connecting the conductive connection part 220 and the terminal 210 to each other.

In some embodiments, the terminal 210 includes a body part 211 and a jaw part 212 that are integrally connected, the body part 211 defines, in an enclosing manner, a hollow zone 213, and the jaw part 212 is connected to the edge of the hollow zone 213 and is bent upward in the thickness direction Z of the body part 211.

In these embodiments, the terminal 210 includes a body part 211 and a jaw part 212, the body part 211 is provided with a hollow zone 213, and the jaw part 212 is connected to a peripheral side of the hollow zone 213, such that the jaw part 212 can be formed by stamping a plate member, and the jaw part 212 is bent upward relative to the body part 211, facilitating connection between the jaw part 212 and the connecting part 51 of the electric component 50.

Optionally, the body part 211 and the conductive connection part 220 are integrally formed, and the jaw part 212 and the body part 211 are integrally formed with. The jaw part 212 is connected to the edge of the hollow zone 213, and the shape of the jaw part 212 matches the shape of the hollow zone 213, or the area of the jaw part 212 is smaller than the area of the hollow zone 213, such that the hollow zone 213 and the jaw part 212 can be formed by performing cutting, stamping, polishing, or other processes on the body part 211.

In some embodiments, the wall part 110 includes a connecting hole 111 provided in a penetrating manner, and the jaw part 212 and the connecting hole 111 are arranged in a corresponding manner, such that the jaw part 212 is capable of connecting to the electric component 50 via the connecting hole 111.

In these embodiments, the wall part 110 is provided with a connecting hole 111, such that the connecting part 51 of the electric component 50 is capable of extending into the connecting hole 111 to connect to the jaw part 212.

Optionally, the connecting part 51 of the electric component 50 extends via the connecting hole 111. The jaw part 212 is disposed in the connecting hole 111, and the jaw part and the connecting part 51 of the electric component 50 are connected to each other.

Optionally, the jaw part 212 may protrude out of the surface of the wall part 110 facing away from the accommodating space 120 via the connecting hole 111, or the jaw part 212 may protrude out of the surface of the wall part 110 facing the accommodating space 120 via the connecting hole 111. Alternatively, the jaw part 212 may protrude directly out of the surface of the wall part 110 facing the connecting hole 111 and be disposed in the connecting hole 111. The jaw part 212 and the connecting part 51 of the electric component 50 are connected to each other in the connecting hole 111.

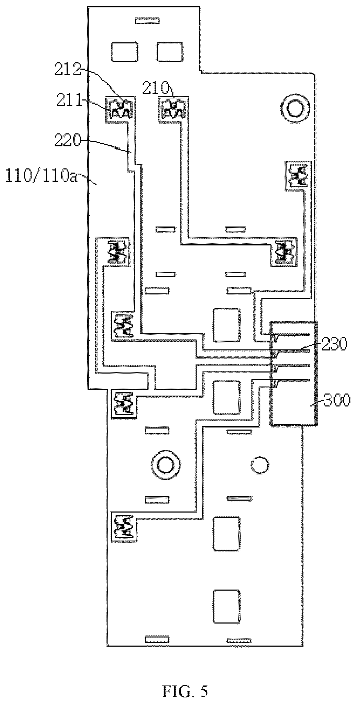

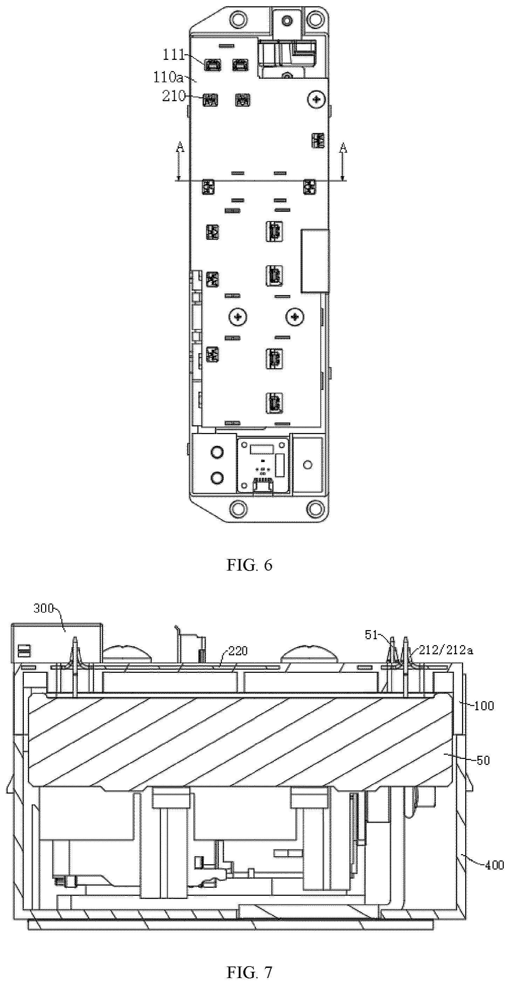

In some embodiments, as shown in FIGs. 5 to 7, the jaw part 212 includes two or more jaw plates 212a, each of the jaw plates 212a is connected to at least one side in the circumferential direction of the hollow zone 213, and at least two jaw plates 212a are disposed on two sides of the hollow zone 213 and extend in the direction close to each other, such that the connecting part 51 of the electric component 50 is capable of being sandwiched between the two jaw plates 212a.

In these embodiments, the jaw part 212 includes a plurality of jaw plates 212a, and at least two jaw plates 212a are oppositely disposed on two sides of the hollow zone 213 and extend in the direction close to each other. By using elastic force of the two jaw plates 212a, an interference fit can be formed between the jaw plates 212a and the connecting part 51 of the electric component 50, such that the connecting part 51 is capable of being snap-fitted between the two jaw plates 212a. Therefore, the connection mode between the electric component 50 and the jaw part 212 can be simplified, and the stability of the electrical connection can be ensured.

Optionally, the jaw part 212 includes three jaw plates 212a. One of the jaw plates 212a and the other two jaw plates 212a are oppositely disposed on two sides of the hollow zone 213. In addition, the above one jaw plate 212a is correspondingly located centrally between the two jaw plates 212a on the opposite side, such that the three jaw plates 212a can apply balanced pressure to the connecting part 51 of the electric component 50, ensuring a tighter connection between the jaw part 212 and the connecting part 51 of the electric component 50.

Optionally, in the thickness direction Z of the body part 211 away from the body part 211, the jaw plates 212a located on the two opposite sides of the hollow zone 213 are arranged to extend in the direction close to each other. When the jaw plates are away from the body part 211 in the thickness direction Z, the distance between the jaw plates 212a located on the two opposite sides of the hollow zone 213 gradually decreases, enabling an interference fit between the jaw plates and the connecting part 51 of the electric component 50.

In some embodiments, the body part 211 is injection molded into the wall part 110, and the jaw part 212 protrudes out of the surface of the wall part 110.

In these embodiments, the body part 211 is injection molded into the wall part 110, such that the wall part 110 can provide protection for the body part 211 to alleviate scratches on the body part 211 by other components. The jaw part 212 protrudes out of the surface of the wall part 110, facilitating the electrical connection between the jaw part and the connecting part 51 of the electric component 50. In addition, since the body part 211 is injection molded into the wall part 110, the positional stability of the body part 211 can be ensured. When the connecting part 51 is snap-fitted to the jaw part 212, the impact of the unstable position of the jaw part 212 on the stability of the electrical connection is alleviated.

Optionally, the body part 211 is injection molded into the wall part 110, and the jaw part 212 may protrude from the inner surface of the wall part 110 facing the connecting hole 111. As described above, the jaw part 212 and the connecting part 51 of the electric component 50 may be connected to each other in the connecting hole 111. Alternatively, the clamping part may protrude out of the surface of the wall part 110 facing or facing away from the accommodating space 120 via the connecting hole 111, to increase the dimension of the jaw part 212 and ensure that the jaw part 212 has a sufficient contact area with the connecting part 51 of the electric component 50. For example, when the first housing 100 is the above first upper housing 4021, the clamping part may protrude out of the surface of the wall part 110 facing away from the accommodating space 120 via the connecting hole 111, such that the jaw part 212 and the connecting member of the electric component 50 can be electrically connected to each other between the first upper housing 4021 and the second upper housing 4022.

In some embodiments, the conductive connection part 220 is injection molded into the wall part 110.

In these embodiments, the wall part 110 can provide protection for the conductive connection part 220, preventing the conductive connection part 220 from being suspended in the accommodating space 120 and affecting the mounting of other components.

Optionally, both the conductive part and the body part 211 are injection molded into the wall part 110, such that the reliability of the connection between the conductive connection part 220 and the body part 211 can be ensured.

In some embodiments, the electric connector 200 further includes a plug-in end 230, at least one conductive connection part 220 is connected between the terminal 210 and the plug-in end 230, and the conductive connection part 220, the terminal 210, and the plug-in end 230 that are connected to one another are integrally formed.

In these embodiments, some terminals 210 are electrically connected to the outside through the plug-in end 230, such that the other end of some conductive connection parts 220 is connected to the plug-in end 230. The conductive connection part 220, the terminal 210, and the plug-in end 230 that are connected to one another are integrally formed, which can further simplify the structure of the electric connector 200. Moreover, there is no need to assemble the conductive connection part 220 and the plug-in end 230 in the high-voltage box 40. Therefore, the assembly process of the high-voltage box 40 can be simplified, and the assembly efficiency of the high-voltage box 40 is improved, thereby increasing the assembly rate of the battery.

Optionally, as described above, in the plurality of terminals 210, some terminals 210 are electrically connected through the conductive connection part 220 and the plug-in end 230, while some other terminals 210 may be connected to two ends of the conductive connection part 220.

The plug-in end 230 may be connected to one end of the conductive connection part 220 facing away from the terminal 210, and extend in the thickness direction Z, such that the plug-in end 230 can protrude from the conductive connection part 220, thereby facilitating mutual plug-in connection between the plug-in end 230 and another component. Optionally, the plug-in end 230 includes a connecting segment and a plug-in segment. The connecting segment is connected to the conductive connection part 220 and extends in the thickness direction Z. The plug-in segment is connected to one end of the connecting segment facing away from the conductive connection part 220, and extends out of the conductive connection part 220 in the length direction. The plug-in segment and another component may be in mutual plug-in connection.

Optionally, the high-voltage box 40 includes a plurality of plug-in ends 230, and the plurality of plug-in ends 230 may be arranged in parallel, facilitating mutual plug-in connection between the plurality of plug-in ends 230 and the same plug-in component.

In some embodiments, the high-voltage box 40 further includes a plug-in port 300. The plug-in end 230 is plugged into the plug-in port 300, and the plug-in port 300 is injection molded on the wall part 110.

In these embodiments, the plug-in port 300 configured to accommodate the plug-in end 230 is injection molded on the wall part 110, and there is no need to assemble the plug-in port 300 and the first housing 100 in the high-voltage box 40. Therefore, the assembly process of the high-voltage box 40 can be simplified, and the assembly efficiency of the high-voltage box 40 is improved, thereby increasing the assembly rate of the battery.

Optionally, as described above, the high-voltage box 40 includes a plurality of plug-in ends 230, the plurality of plug-in ends 230 may be arranged in parallel, and the plurality of plug-in ends 230 and the same plug-in port 300 are in mutual plug-in connection.

In some embodiments, the wall part 110 includes a top wall 110a and a side wall 120a connected to the peripheral side of the top wall 110a, the top wall 110a and the side wall 120a define, in an enclosing manner, the accommodating space 120, and the electric connector 200 is disposed on the top wall 110a.

In these embodiments, the electric connector 200 is disposed on the top wall 110a, facilitating electrical connection between the terminals 210 of the electric connector 200 and electric components 50 at different positions in the accommodating space 120.

Optionally, as described above, when the conductive connection part 220 and/or the body part 211 are injection molded into the wall part 110, the conductive connection part 220 and/or the body part 211 may be injection molded into the top wall 110a. The top wall 110a is provided with the above connecting hole 111, the jaw part 212 is arranged corresponding to the connecting hole 111 on the top wall 110a, and the connecting part 51 of the electric component 50 and the jaw part 212 are connected to each other via the connecting hole 111 on the top wall 110a.

In some embodiments, the side wall 120a is provided with a first snap part 130; and the high-voltage box 40 further includes a second housing 400, the second housing 400 is disposed on the side of the side wall 120a facing away from the top wall 110a, the second housing 400 is provided with a second snap part 410, and the first housing 100 and the second housing 400 are snap-fitted to each other through the first snap part 130 and the second snap part 410.

In these embodiments, the first housing 100 and the second housing 400 are snap-fitted to each other through the first snap part 130 and the second snap part 410, which can simplify the assembly process of the first housing 100 and the second housing 400, improve the assembly efficiency of the high-voltage box 40, and ensure the stability of the relative positions between the first housing 100 and the second housing 400.

Optionally, the second housing 400 may be the bottom housing 401 of the above high-voltage box 40. The first snap part 130 and the second snap part 410 may be configured in various ways. For example, the first snap part 130 is a snap hook, the second snap part 410 is a snap hole, and the snap hook is snap-fitted to the snap hole.

Optionally, the first snap part 130 and the side wall 120a are integrally formed, the side wall 120a may be provided with a snap groove, one end of the first snap part 130 and the bottom wall of the snap groove are connected to each other, and the other end of the first snap groove extends out of the snap groove. A gap is provided between the first snap part 130 and the side wall 120a of the snap groove, such that the first snap part 130 can deform toward the accommodating space 120 or away from the accommodating space 120 relative to the first snap groove. By utilizing the elasticity of the material of the first snap part 130, the first snap part 130 can be snap-fitted to the second snap part 410.

Optionally, the first snap part 130 on the side wall 120a may further include a snap hole, and the second snap part 410 on the second housing 400 may further include a snap hook, such that side walls 120a are snap-fitted to each other through the snap hole and the snap hook.

Optionally, the side wall 120a includes two first side walls oppositely disposed in the first direction X and a second side wall oppositely disposed in the second direction Y, and the two first side walls and the two second side walls are connected end-to-end to define, in an enclosing manner, the accommodating space 120. The first snap part 130 on the first side wall may be a snap hook, and the first snap part 130 on the second side wall may be a snap hole.

In some embodiments of the present application, the embodiments of the present application further provide a battery. The battery includes the high-voltage box 40 according to any one of the above first aspects. Optionally, the electric component 50 is disposed inside the high-voltage box 40.

In some embodiments of the present application, the embodiments of the present application further provide an electric device. The electric device includes the battery of any one of the above embodiments, and the battery is used to provide electrical energy.

The electric device may be any one of the aforementioned devices or systems that use the battery.

Referring to FIGs. 3 to 7, the embodiments of the present application provide a high-voltage box 40 for a battery. The high-voltage box 40 includes: a first housing 100, having a wall part 110 and an accommodating space 120 defined by the wall part 110 in an enclosing manner, where the accommodating space 120 is configured to accommodate an electric component 50; and an electric connector 200, disposed in the first housing 100, where the electric connector 200 includes a plurality of terminals 210 and conductive connection parts 220, each of the conductive connection parts 220 is connected to at least one of the terminals 210 and is integrally formed with the terminal 210, and the terminal 210 is configured to connect to the electric component 50. The wall part 110 includes a top wall 110a and a side wall 120a connected to the peripheral side of the top wall 110a, the top wall 110a and the side wall 120a define, in an enclosing manner, the accommodating space 120, and the electric connector 200 is disposed on the top wall 110a. The terminal 210 includes a body part 211 and a jaw part 212 that are integrally connected, the body part 211 defines, in an enclosing manner, a hollow zone 213, and the jaw part 212 is connected to the edge of the hollow zone 213 and is bent upward in the thickness direction Z of the body part 211. The top wall 110a includes a connecting hole 111 provided in a penetrating manner, and the jaw part 212 and the connecting hole 111 are arranged in a corresponding manner, such that the jaw part 212 is capable of connecting to the electric component 50 via the connecting hole 111. The body part 211 and the conductive connection part 220 are integrally injection molded into the top wall 110a. The jaw part 212 protrudes out of the inner surface of the top wall 110a facing the connecting hole 111 to the surface of the top wall 110a facing away from the accommodating space 120. The jaw part 212 includes two or more jaw plates 212a, each of the jaw plates 212a is connected to at least one side in the circumferential direction of the hollow zone 213, and the at least two jaw plates 212a are disposed on two sides of the hollow zone 213 and extend in the direction close to each other, such that the connecting part 51 of the electric component 50 is capable of being sandwiched between the two jaw plates 212a. The electric connector 200 further includes a plug-in end 230, at least one conductive connection part 220 is connected between the terminal 210 and the plug-in end 230, and the conductive connection part 220, the terminal 210, and the plug-in end 230 that are connected to one another are integrally formed. The high-voltage box 40 further includes a plug-in port 300. The plug-in end 230 is plugged into the plug-in port 300, and the plug-in port 300 is injection molded on the wall part 110.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A high-voltage box for a battery, wherein the high-voltage box comprises:
a first housing, having a wall part and an accommodating space defined by the wall part in an enclosing manner, wherein the accommodating space is configured to accommodate an electric component; and
an electric connector, disposed in the first housing, wherein the electric connector comprises a plurality of terminals and conductive connection parts, each of the conductive connection parts is connected to at least one of the terminals and is integrally formed with the terminal, and the terminal is configured to connect to the electric component.

2. The high-voltage box according to claim 1, wherein the terminal comprises a body part and a jaw part that are integrally connected, the body part defines, in an enclosing manner, a hollow zone, and the jaw part is connected to an edge of the hollow zone and is bent upward in a thickness direction of the body part.

3. The high-voltage box according to claim 2, wherein the wall part comprises a connecting hole provided in a penetrating manner, and the jaw part and the connecting hole are arranged in a corresponding manner, such that the jaw part is capable of connecting to the electric component via the connecting hole.

4. The high-voltage box according to claim 3, wherein the jaw part comprises two or more jaw plates, each of the jaw plates is connected to at least one side in a circumferential direction of the hollow zone, and at least two jaw plates are disposed on two sides of the hollow zone and extend in a direction close to each other, such that the electrical connection part of the electric component is capable of being sandwiched between the two jaw plates.

5. The high-voltage box according to any one of claims 2 to 4, wherein the body part is injection molded into the wall part, and the jaw part protrudes out of a surface of the wall part.

6. The high-voltage box according to any one of claims 1 to 5, wherein the conductive connection part is injection molded into the wall part.

7. The high-voltage box according to any one of claims 1 to 6, wherein the electric connector further comprises a plug-in end, at least one of the conductive connection parts is connected between the terminal and the plug-in end, and the conductive connection part, the terminal, and the plug-in end that are connected to one another are integrally formed.

8. The high-voltage box according to claim 7, further comprising a plug-in port, wherein the plug-in end is plugged into the plug-in port, and the plug-in port is injection molded on the wall part.

9. The high-voltage box according to any one of claims 1 to 8, wherein the wall part comprises a top wall and a side wall connected to a peripheral side of the top wall, the top wall and the side wall define, in an enclosing manner, the accommodating space, and the electric connector is disposed on the top wall.

10. The high-voltage box according to claim 9, wherein
the side wall is provided with a first snap part; and
the high-voltage box further comprises a second housing, the second housing is disposed on a side of the side wall facing away from the top wall, the second housing is provided with a second snap part, and the first housing and the second housing are snap-fitted to each other through the first snap part and the second snap part.

11. A battery, comprising the high-voltage box according to any one of claims 1 to 10.

12. An electric device, comprising the battery according to claim 11, wherein the battery is configured to provide electrical energy.
